# EUROPÄISCHE PATENTANMELDUNG

(11) **EP 0 873 006 A2**
(43) Veröffentlichungstag der Anmeldung: **21.10.1998**
(21) Anmeldenummer: 98106828.1
(22) Anmeldetag: 15.04.1998
(51) Int. Cl.: H04N 1/195

(54) **Fotoplott-Verfahren und Anordnung zur Aufzeichnung eines computergespeicherten Rasterbildes auf einen ebenen lichtempfindlichen Aufzeichnungsträger**

(30) Priorität: 18.04.1997 DE 19716240
(71) Anmelder: MIVATEC Hard- und Software GmbH, 71101 Schönaich (DE)
(72) Erfinder: Pagan, Robin, 70563 Stuttgart (DE)
(74) Vertreter: Blutke, Klaus Wilhelm, Dipl.-Ing.

(57) **Zusammenfassung**

Ein computer (0)-gespeichertes Rasterbild, aufgeteilt in Teilflächen (A1,B1, C1,..) mit jeweiligen Rasterpunkt-Positionen (r1-r9) wird auf einen lichtempfindlichen Aufzeichnungsträger (5), aufgeteilt in Teilflächen A1', B1', C1', .. mit den jeweiligen Bildelement-Positionen (p1-p9), aufgezeichnet.
Für die Rasterpunkte an den r1 Positionen aller Teilflächen A1, B1, C1, ...werden gleichzeitig in einem ersten Zeitabschnitt die Bildelemente an den p1 Positionen aller Teilflächen A1', B1', C1',... aufgezeichnet; in nachfolgenden Zeitabschnitten folgen die Bildelemente an den p2 Positionen für die Rasterpunkte an den r2 Positionen etc.
Die Aufzeichnung wird computerprogrammgesteuert durch eine Matrix 1 lichtsteuernder Elemente LA1, LB1, LC1, .., eine Lochmatrix 2, eine Verschiebeeinrichtung 3 und ein aufzeichnungsmaßstab- bestimmendes Objektiv 4 bewirkt. Vorzugsweise Anwendung für die Herstellung von Fotovorlagen für gedruckte Leiterplatten.

## Beschreibung

Die Erfindung bezieht sich auf ein Fotoplott-Verfahren und eine Anordnung zur Aufzeichnung eines computergespeicherten Rasterbildes auf einen ebenen lichtempfindlichen Aufzeichnungsträger.

Fotoplott-Verfahren und -Anordnungen dienen z.B. zur Herstellung fotographischer Vorlagen für gedruckte Leiterplatten.

Nach dem Stand der Technik (Informationsblatt "Xenon-Plotter" der Firma MIVATEC, Hard- und Software GmbH, Benzstr.17, D-71171 Schönaich vom 15.10.1996) sind Fotoplotter bekannt, die ein computergepeichertes Rasterbild auf einen ebenen lichtempfindlichen Aufzeichnungsträger aufzeichnen.

Bei dieser Aufzeichnung wird ein sogenannter Belichtungskopf ( mit einer Aufzeichnungsfläche von ca.5 x 7,5 mm) über einen relativ zu ihm großflächigen Aufzeichnungsträger (bis ca. 720 x 600 mm) zur Aufzeichnung von Bildelementen geführt, aus denen das Aufzeichnungsträger-Rasterbild zusammengesetzt ist.

Im Belichtungskopf ist eine sogenannte LCD-Matrix lichtsteuernder Elemente vorgesehen ( LCD: liquid crystal device = Flüssig-Kristall-Anordnung). Sie besteht aus einer Vielzahl matrixförmig angeordneter Flüssig-Kristall-Elemente, von denen jedes selektiv elektrisch angesteuert werden kann, um es für Durchlicht zu öffnen oder zu sperren.

Wird diese LCD-Matrix mit Durchlicht beaufschlagt, so kann dieses die Matrix nur an den Elementen als "Lichtstrahl" passieren, die auf Durchlaß gesteuert sind.

Die durchgelassenen Lichtstrahlen erzeugen auf dem lichtempfindlichen Aufzeichnungsträger jeweils ein Bildelement. Fehlende Lichtstrahlen -gleichbedeutend mit gesperrten Elementen- erzeugen " fehlende Bildelemente".

Das Aufzeichnungsträger-Rasterbild besteht aus einer Vielzahl von Bildelementen, aufgezeichnete und nicht aufgezeichnete (fehlende) eingeschlossen.

In der vorstehend genannten Anordnung wird die LCD-Matrix mit dem Licht einer Xenon-Blitzlampe beaufschlagt.

Da der die LCD-Matrix enthaltende Belichtungskopf eine ungleich kleinere Fläche (zu vergleichen mit dem Feld eines Schachbrettes) als der Aufzeichnungsträger (zu vergleichen mit einem Schachbrett mit enorm vielen Feldern) hat, muß dieser Belichtungskopf nacheinander auf alle Schachbrettfeldpositionen geführt werden, damit dort Bildelemente aufgezeichnet werden können.

Die Bewegung des Belichtungskopfes über die gesamte Fläche des Aufzeichnungsträgers stellt bei einem erstrebtem hohen Auflösungsvermögen (im Bereich > 10 mikrometer) des Aufzeichnungsträger-Rasterbildes höchste Toleranzanforderungen an die Präzision der Bewegungsmechanik zur Verschiebung des Kopfes.

Je größer die Verschiebungsstrecken, um so schwieriger ist es, höchste Toleranzanforderungen zu erfüllen .

Die Verschiebung des Belichtungskopfes über die gesamte Aufzeichnungsträgerfläche ist deshalb problematisch und begrenzt die Genauigkeit der Aufzeichnung, ganz abgesehen von dem enormen apparativen und Kostenaufwand für eine solche Verschiebeeinrichtung.

Außerdem fallen bei den vorgenannten Fotoplottern hohe Plottzeiten ( 6 min bis 1 Stunde je nach Auflösung) an.

Zur Vermeidung dieser Nachteile ( großflächig arbeitende Verschiebeeinrichtung , hohe Plottzeiten) ist es deshalb Aufgabe der Erfindung, ein Fotoplottverfahren und eine Anordnung zu seiner Durchführung mit einer Verschiebeeinrichtung für einen kleineren Verschiebebereich und für geringere Plottzeiten anzugeben.

Es ist weiterhin Aufgabe der Erfindung, ein Fotoplottverfahren und eine Anordnung zu seiner Durchführung anzugeben, welche(s) die Aufzeichnung eines Aufzeichnungsträger-Rasterbildes mit veränderbarem Abbildungsmaßstab gestattet, um beispielsweise bei verkleinerten Abbildungen ein höheres Auflösungsvermögen zu erreichen.

Diese Aufgaben der Erfindung werden in vorteilhafter Weise durch die im kennzeichnenden Teil der Ansprüche 1 und 14 angegebenen Merkmale gelöst.

Vorteilhafte Weiterbildungen der Erfindung sind in den Unteransprüchen gekennzeichnet.

Prinzipdarstellungen und Ausführungsbeispiele der Erfindung sind in den Zeichnungen dargestellt und werden im folgenden näher beschrieben.

Es zeigen:
FIG.1 eine schematische perspektivische Darstellung einer erfindungsgemäßen Anordnung mit einer Lochmatrix, einer LCD-Matrix und einer Verschiebeeinrichtung,
FIG.2 eine schematische Darstellung eines Aufzeichnungsträgers mit den während eines ersten Zeitabschnittes in den ersten Bildelement-Positionen aller Aufzeichnungsträger-Rasterbild-Teilflächen aufgezeichneten Bildelementen,
FIG.3 eine schematische Darstellung einer Steuer-Muster-Folge ST1, ST2,..,ST9 für die Zeitabschnitte T1, T2 und T9,
FIG.4A-FIG.4I eine schematische Darstellung des Steuerzustandes des Lichtsteuer-Elementes LA1 während der Zeitabschnitte T1 bis T9 in Verbindung mit der diesem Element LA1 zugeordneten Öffnung a1 des Lochmatrix-Feldes HA1 und dem durch diese Öffnung hindurchtretenden ( bzw. nicht hindruchtretenden) die Aufzeichnung eines Bildelementes bewirkenden Lichtstrahles,
FIG. 5A eine schematische ausschnittsweise Darstellung eines mit einem bestimmten Abbildungsmaßstab aufgezeichneten Rasterbildes,
FIG.5B eine schematische Darstellung des Rasterbildes gemäß FIG. 5A mit einem Abbildungsmaßstab 1:3,
FIG. 6A eine schematische Darstellung verschiedener nicht überlappender kreisrunder Bildelemente zur Ausbildung einer Randkontur RC,
FIG. 6B eine schematische Darstellung verschiedener einander um 50 % überlappender kreisrunder Bildelementen zur Ausbildung einer Randkontur RF,
FIG.7 eine auszugsweise schematische Aufsicht-Darstellung verschiedener Lochmatrix-Felder mit Fresnel-Beugungsgittern,
FIG. 8 eine schematische perspektivische Darstellung einer X/Y-Tisch-Verschiebeeinrichtung für die Lochmaske.
FIG. 9 eine schematische Darstellung einer erfindungsgemäßen Anordnung, welches einen Spiegelelemente-Halbleiter-Chip und verschiedene Objektive enthält.
FIG.10 zeigt eine schematische Darstellung eines Verschiebungsbereiches der Lochmatrix, der sich über mehrere Lochmatrix-Felder erstreckt und bei dem die Rasterpunkte einer Computer-Rasterpunkt-Teilfläche mehreren benachbarten lichtsteuernden Elementen der Licht-Steuer-Matrix zugeordnet sind

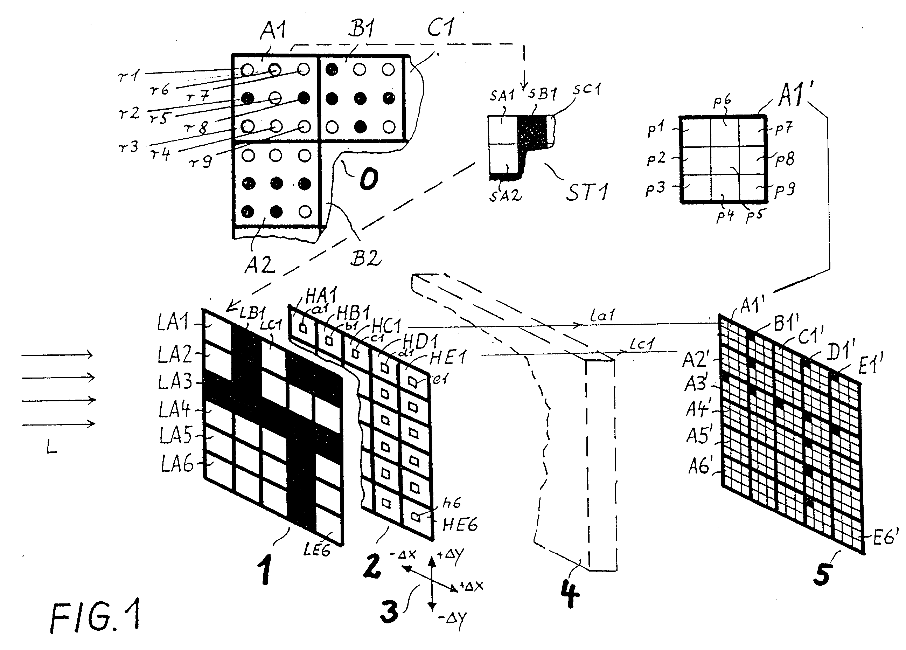

FIG.1 zeigt eine schematische perspektivische Darstellung einer erfindungsgemäßen Anordnung mit einer Lochmatrix 2, einer LCD-Matrix 1 und einer Verschiebeeinrichtung 3,

Das computergespeicherte Rasterbild 0 ist in gedachte Computer-Rasterbild-Teilflächen (A1, B1, C1, ...; A2. ...) aufgeteilt: jede Teilfläche weist matrixartig angeordnete Rasterpunkt-Positionen ( r1, r2, r3, r4 ... r9) auf.

Jede Rasterpunkt-Position versteht sich als Speicherzelle mit binärem Status (Informationsgehalt) :"an" (Darstellung als weißer Kreis) oder "aus" (Darstellung als schwarzer Kreis).

Das computergespeicherte Rasterbild setzt sich bildlich interpretiert aus Rasterpunkten zusammen, die einen "an" - oder "aus" Status aufweisen.

Das Rastermaß, der gedachte Abstand zweier benachbarter Rasterpunkte ist vorgegeben.

Durch das Rasterbild können ebene Strukturen wiedergegeben werden, z.B. der Verlauf von Leiterbahnen auf gedruckten Leiterplatten.

Derartige Leiterbahnen werden computerprogrammgesteuert berechnet und als Rasterbild in einem Computer gespeichert; dieses wird computerprogrammgesteuert auf einem lichtempfindlichen Aufzeichnungsträger aufgezeichnet, der als Vorlage für die Herstellung gedruckter Leiterplatten dient.

Das aufgezeichnete Rasterbild (Aufzeichnungsträger-Rasterbild) setzt sich aus Bildelementen als kleinsten "Druckpunkten" zusammen. Diese können z.B. kleine runde oder quadratische "Druckpunkte" sein.
Aufgezeichnete "Druckpunkte" sind weißflächig, fehlende schwarzflächig dargestellt.

Das Aufzeichnungsträger-Rasterbild ist in gedachte matrixartig angeordnete Aufzeichnungsträger-Rasterbild-Teilflächen (A1', B1', C1', D1', E1'; A2',...; ....E6') aufgeteilt; diese Teilflächen weisen jeweils matrixartig angeordnete Bildelement-Positionen (p1, p2, p3,... p7, p8, p9) auf.

Computer-Rasterbild-Teilflächen (A1, B1, C1,...) und Aufzeichnungsträger-Rasterbild-Teilflächen (A1', B1', C1', ...) sowie Rasterpunkt-Positionen (r1, r2, ...r9) und Bildelement-Positionen (p1, p2, ...p9) sind einander zugeordnet.

In einem ersten Zeitabschnitt T1 (auf diesen bezieht sich die Darstellung in FIG. 1) werden für die Rasterpunkte in den Positionen r1 aller Computer-Rasterbild-Teilflächen (A1, B1, C1,...) die diesen entsprechenden Bildelementen in den Positionen p1 aller Aufzeichnungsträger-Rasterbild-Teilflächen (A1', B1', C1',...) gleichzeitig aufgezeichnet.

Für den Rasterpunkt an der Position r1 der Teilfläche A1 mit dem Status "an" (weißflächige Darstellung) wird ein Bildelement an der Position p1 der Teilfläche A1' (in ebenfalls weißflächiger Darstellung ) erzeugt; für den Rasterpunkt an der Position r1 der Teilfläche B1 mit dem Status "aus" (schwarz dargestellt) wird ein Bildelement an der Position p1 der Teilfläche B1' (schwarz dargestellt) "erzeugt".

In einem auf den ersten T1 folgenden zweiten Zeitabschnitt T2 werden für die Rasterpunkte in den Positionen r2 aller Computer-Rasterbild-Teilflächen (A1, B1, C1,...) die diesen entsprechenden Bildelementen in den Positionen p2 aller Aufzeichnungsträger-Rasterbild-Teilflächen (A1', B1', C1',...) gleichzeitig aufgezeichnet.

Analoges gilt für die darauffolgenden Zeitabschnitte T3, T4 usw. bis schließlich in dem neunten Zeitabschnitt T9 für die Rasterpunkte in den Positionen r9 aller Computer-Rasterbild-Teilflächen (A1, B1, C1,...) die diesen entsprechenden Bildelemente in den Positionen p9 aller Aufzeichnungsträger-Rasterbild-Teilflächen (A1', B1', C1',...) gleichzeitig aufgezeichnet werden.

Im Falle von 3x3= 9 Rasterpunkten pro Computer-Rasterbild-Teilflache werden in neun aufeinanderfolgenden Zeitabschnitten T1 bis 19 für die Rasterpunkte in den neun Rasterpunkt-Positionen r1-r9 die entsprechenden Bildelemente in den neun Bildelement-Positionen p1-p9 aufgezeichnet.

Nachfolgend wird beschrieben wie die Aufzeichnung der Bildelemente im Zeitabschnitt T1 (FIG. 1) bewirkt wird:

Die LCD-Matrix 1 besteht aus matrixartig angeordneten lichtsteuernden Elementen (LA1, LB1, LC1, ... ; LA2,....; LB2,....;LC2, ...). Die lichtsteuernden Elemente und die Computer-Rasterbild-Teilflächen (A1, B1, C1, ... ; A2,...; B2,...; C2, ...) sind einander zugeordnet.

Im Zeitabschnitt T1 bestimmt der Status des Rasterpunktes an der Position r1 der Teilflächen A1, B1, C1, ...., ob das einer solchen Teilfläche zugeordnete lichtsteuernde Element (LA1, LB1, LC1, ...) lichtdurchlässig oder lichtsperrend gesteuert wird:
LA1 wird entsprechend dem "an"-Status (weiß dargestellt) des Rasterpunktes an der Position r1 der Teilfläche A1 lichtdurchlässig ( weiß dargestellt) gesteuert;
LB1 wird entsprechend dem "aus"-Status (schwarz dargestellt) des Rasterpunktes an der Position r1 der Teilfläche B1 lichtsperrend ( schwarz dargestellt) gesteuert.

Die Steuerung der Licht-Steuer-Matrix im Zeitabschnitt T1 erfolgt über ein gedachtes Steuer-Muster ST1 .
Dieses Steuer-Muster hat eine gedachte matrixartige Aufteilung von Steuer-Befehlen (SA1, SB1, SC1, ...) für die lichtsteuernden Elemente (LA1, LB1, LC1,...). Der Steuerbefehl SA1 (weiß dargestellt) reflektiert den "an"-Status (weiße Darstellung) des Rasterpunktes in der Position r1 der Computer-Rasterbild-Teilfläche A1 ; der Steuerbefehl SB1 (schwarze Darstellung) den "aus"-Status des Rasterpunktes in der Position r1 der Teilfläche A2. etc.

Im folgenden wird die Funktion der LCD-Matrix 1 im Zusammenhang mit der Loch-Matrix 2 beschrieben.

Die Loch-Matrix 2 ist in matrixartig angeordnete Loch-Matrix-Felder (HA1, HB1, HC1, ...; HA2, HB2, HC2, ...) aufgeteilt.Die lichtsteuernden Elemente ( LA1, LB1, LC1, ...; LA2, LB2, LC2, ...) und die Loch-Matrix-Felder (HA1, HB1, HC1, ... ) sind einander zugeordnet.

Jedes Loch-Matrix-Feld ( HA1, HB1,...) weist eine öffnung (a1, b1,...) auf, deren Abmessung bei angestrebter hoher Auflösung des aufzuzeichnenden Rasterbildes im Bereich von Mikrometern liegt.

Jedem Lochmatrixfeld (HA1, HB1, HC1, ...) ist eine Aufzeichnungsträger- Rasterbild-Teilfläche (A1', B1'. C1', ...) zugeordnet.

Wird die LCD-Matrix 1 z.B. mit parallelem (Durch-)Licht L beaufschlagt,so tritt dieses durch die auf Lichtdurchlaß gesteuerten Elemente (LA1, LC1,..) hindurch und trifft auf die diesen Elementen zugeordneten Lochmatrix-Felder (HA1, HC1,..).
Im Bereich der Öffnungen (a1, c1,.. ) dieser Felder gelangen die hindurchtretenden Lichtstrahlen (la1,lc1,..) auf den Aufzeichnungsträger und bewirken dort die Aufzeichnung von (weiß dargestellten) Bildelementen in den Bildelement-Positionen p1 von A1' und C1'.
Für lichtsperrend gesteuerte Elemente (LB1, LD1,..) kann kein Licht durch die Öffnungen (b1, d1,...) der diesen Elementen zugeordneten Lochmatrix-Felder (HB1, HD1) hindurchtreten- was der "Aufzeichnung" (schwarz dargestellter) "fehlender Bildelemente" in der Position p1 von B1' und D1' etc. durch "fehlende Lichtstrahlen" gleichkommt.

Auf diese Weise bewirken die durch die Öffnungen der Loch-Matrix-Felder hindurchtretenden bzw nicht hindurchtretenden Lichtstrahlen die Aufzeichnung der Bildelemente in der Bildelemente-Position p1 aller Aufzeichnungsträger-Rasterbild-Teilflächen (A1', B1', C1',

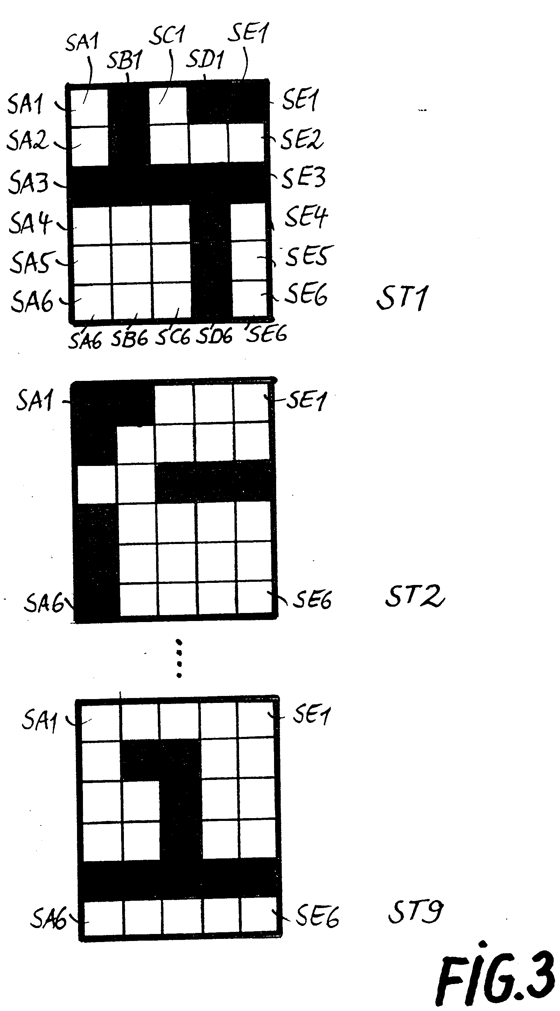

Nachfolgend wird beschrieben wie die Aufzeichnung der Bildelemente in dem Zeitabschnitt T2 erfolgt:
Im Zeitabschnitt T2 wird die LCD-Matrix 1
mit einem zweiten Steuer-Muster ST2 (FIG.3) beaufschlagt, welches den an- oder aus-Status der Rasterpunkte in der zweiten Rasterpunkt-Position aller Computer-Rasterbild-Teilflächen (A1, B1, C1, ...) widerspiegelt.

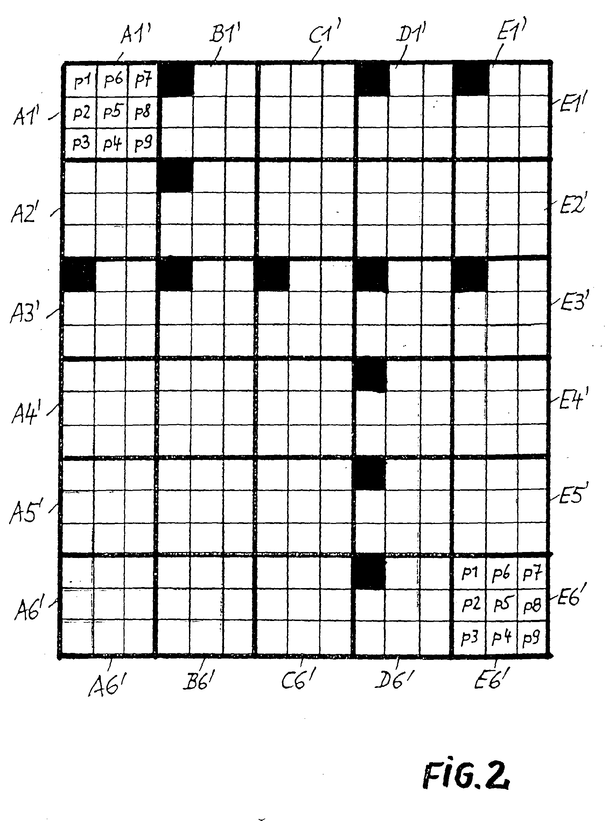

Die Positionsfolge der Rasterpunkte (und die der Bildelemente) ist willkürlich vorgegeben (z.B. 1.Spalte abwärts- zweite Spalte aufwärts-dritte Spalte abwärts wie in FIG. 1 und 2).

Die Aufzeichnung eines Bildelementes an einer bestimmten Bildelemente-Position (p1, p2, ...p9) in einer Aufzeichnungsträger-Rasterbild-Teilfläche ( A1', B1', C1', ...) erfordert es, daß für jede Bildelemente-Position die entsprechende Loch-Matrix-öffnung des Loch-Matrix-Feldes auf die Bildelemente-Position des dem Loch-Matrix-Feld zugeordneten Aufzeichnungsträger-Rasterpunkt-Teilfläche exakt ausgerichtet ist.

Jeder Aufzeichnungsträger-Rasterbild-Teilfläche A1' ist ein Loch-Matrix-Feld LA1 mit einer Öffnung a1 zugeordnet. In jedem Zeitabschnitt , z.B. T1, wird durch den diese öffnung passierenden Lichtstrahl - sofern das A1 zugeordnete lichtsteuernde Element LA1 nicht gesperrt ist- ein Bildelement an einer bestimmten Bildelemente-Position, für den Zeitabschnitt T1 ist dies die Position p1, aufgezeichnet.
Für die Aufzeichnung des nächsten Bildelementes in dem darauffolgenden Zeitabschnitt T2 müssen Loch-Matrix und Aufzeichnungsträger so gegeneinander verschoben werden, daß der dann die Öffnung a1 passierende Lichtstrahl das Bildelement an der Position p2 aufzeichnen kann.
Im Ausführungsbeispiel gemäß FIG.1 wird die Lochmaske (samt der mit ihr verbundenen Licht-Steuer-Matrix) um den Wert ^ y gegenüber dem feststehenden Aufzeichnungsträger 5 verschoben. Dieser Verschiebungswert hat genau die Größe, die erforderlich ist , den Lichtstrahl während des Zeitabschnittes T2 auf die Bildelemente-Position p2 (unter der Position p1) auftreffen zu lassen.
Für die in den einzelnen Zeitabschnitten durchzuführenden Verschiebungsschritte in den X/Y-Koordinatenrichtungen ist die Folge der Bildelemente- Positionen p1, p2, p3...p9 (sie entspricht der Folge der Rasterpunkt-Positionen p1, p2, ...p9) maßgebend.
Für das in FIG. 1 dargestellte Beispiel von 3x3= 9 Bildelemente-Positionen pro Aufzeichnungsträger-Rasterbild-Teilfläche muß die Lochmatrix 2 bei feststehendem Aufzeichnungsträger 5 nacheinander ( in 9 aufeinanderfolgenden Zeitabschnitten T1 - T9) 9 verschiedene Verschiebepositionen einnehmen, die den 9 Bildelemente-Positionen einer Aufzeichnungsträger-Rasterbild-Teilfläche entsprechen, damit alle Bildelemente in dieser Teilfläche ( und damit auch allen anderen Teilflächen) aufgezeichnet werden können.

Eine solche X/Y-Verschiebeeinrichtung ist mit Mitteln des Standes der Technik bei geringem apparativem Aufwand und ohne kritische Toleranzprobleme leicht realisierbar. Einzelheiten solcher Verschiebeeinrichtungen werden später beschrieben.
Die Vorschubsteuerung der Verschiebeeinrichtung erfolgt computerprogrammesteuert in Synchronisation mit der Ansteuerung der Licht-Steuer-Matrix 1 für die einzelnen Zeitabschnitte.
In FIG. 1 ist die Verschiebeeinrichtung durch ein mit 3 gekennzeichnetes Koordinatenkreuz für Verschiebeschritte x, y gekennzeichnet.

Ein Vorteil der Erfindung besteht insbesondere darin, daß die Verschiebeeinrichtung 3 nur einen im Vergleich zur Gesamtfläche des Aufzeichnungsträgers 5 sehr kleinen Verschiebungsbereich hat, der einer Aufzeichnungsträger-Rasterbild-Teilfläche entspricht.

Für die Aufzeichnung des gesamten alle Teilflächen umfassenden Aufzeichnungsträger-Rasterbildes ist lediglich eine Verschiebung der Lochmatrix für einen Teilflächenbereich erforderlich.

Ein weiterer Vorteil der Erfindung liegt in der Verringerung der Flottzeit für die Aufzeichnung des gesamten Aufzeichnungsträger-Rasterbildes. Während nach dem Stand der Technik der Belichtungskopf schachbrettmusterartig über den gesamten Aufzeichnungsträger bewegt werden muß (derartige mechanischen Bewegungen sind zeitaufwendig und liegen im Minuten- bis Stunden-Bereich), ist nach der Erfindung die Verschiebung nur für äußerst kleine Verschiebeschritte eines sehr kleinen Verschiebungsbereiches durchzuführen, und dies bei geringer Masse der zu bewegenden Teile.

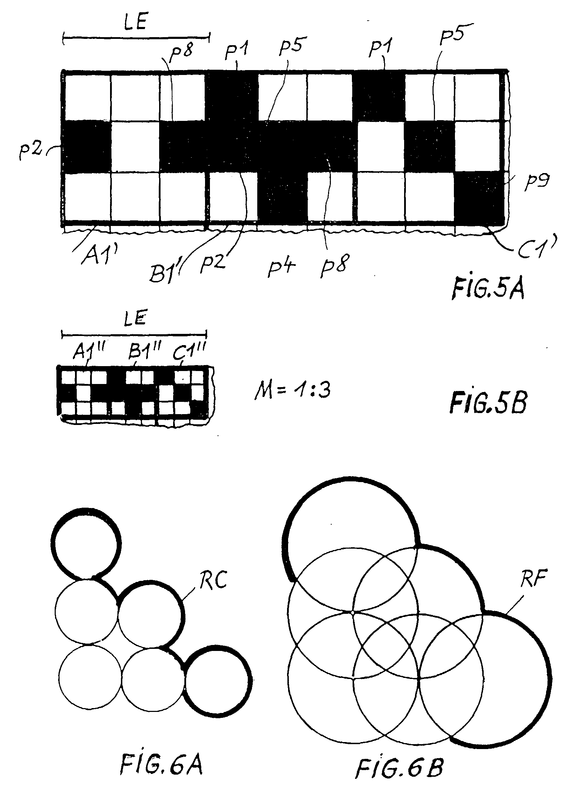

Ein weiterer Vorteil der Erfindung liegt in der Möglichkeit, durch Zwischenschaltung eines Verkleinerungs-(Vergrößerungs)-Objektives zwischen Lochmatrix 2 und Aufzeichnungsträger 5 ein verkleinertes (vergrößertes) Aufzeichnungsträger-Rasterbild mit höherer (kleinerer) Auflösung aufzuzeichnen. Einzelheiten hierzu werden im Zusammenhang mit FIG. 5A und FIG. 5B beschrieben.

FIG.2 zeigt in vergrößerter Darstellung die während des Zeitabschnittes T1 in allen Bildelemente-Positionen p1 bis p9 aufgezeichneten Bildelemente. Die in FIG. 1 verwendeten Bezeichnungen wurden beibehalten. Aus Übersichts- und Vereinfachungsgründen wurden die Positionsbezeichnungen p1 - p9 nur für die Aufzeichnungsträger-Rasterbild-Teilflächen A1' und E6' angegeben.

FIG.3 zeigt eine schematische Darstellung einer Steuer-Muster-Folge ST1, ST2,..,ST9 für die Zeitabschnitte T1, T2 und T9,

Jedes Steuermuster enthält die Steuerbefehle für die lichtsteuernden Elemente der Licht-Steuermatrix 1 (FIG.1). in einem bestimmten Zeitabschnitt.
Die matrixartig dargestellt angeordneten Steuerbefehle SA1, SB1, SC1, SD1, SE1; SA2,.... SE2; SA3,....SE3; SA4,...SE4; SA5,...SE5; SA6,...SE6 sind den lichtsteuernden Elementen LA1, LB1, LC1, LD1, LE1; LA2,...LE2; LA3,...LE3; LA4,..LE4; LA5,...LE5; LA6,...LE6 der Licht-Steuer-Matrix 1 zugeordnet.
Für den Zeitabschnitt T1 bewirken die Steuerbefehle für die lichtsteuernden Elemente, daß durch diese die Aufzeichnung der Bildelemente in allen Bildelemente-Positionen p1 gesteuert wird. Diese Bildelemente entsprechen den Rasterpunkten an den r1-Positionen der Computer-Rasterbild-Teilflächen.
Für einen Rasterpunkt im "an"-Status ( weißer Kreis) wird ein (weiß dargestelltes) Bildelement, für einen Rasterpunkt im "aus"-Status (schwarzer Kreis) wird ein schwarz dargestellten Bildelement erzeugt.

Dem "an"-Status des ersten Rasterpunktes (weißer Kreis) in der Position r1 der Computer-Rasterbild-Teilfläche A1 entsprechend bewirkt der Steuerbefehl SA1 ( ebenfalls in weißer Darstellung ), daß das lichtsteuernde Element LA1 (gleichfalls in weißer Darstellung) lichtdurchlässig gesteuert wird: dies führt über den die Öffnung a1 des Loch-Matrix-Feldes HA1 passierenden Lichtstrahl la1 zur Aufzeichnung eines Bildelementes (weiße Darstellung) in der ersten Position p1 der Aufzeichnungsträger-Rasterbild-Teilfläche A1'(FIG. 1).

Der "aus"-Status des ersten Rasterpunktes (schwarzer Kreis) an der Position r1 der Computer-Rasterbild-Teilfläche B1 hingegen bewirkt, daß der Steuerbefehl SB1 (ebenfalls in schwarzer Darstellung) das lichtsteuernde Element LB1 lichtsperrend (gleichfalls in schwarzer Darstellung) schaltet: dies führt dazu, daß kein Licht auf das Loch-Matrix-Feld HB1 und kein Lichtstrahl durch dessen Öffnung b1 fallen kann. Dies ist jedoch gleichbedeutend mit der "Aufzeichnung" eines fehlenden Bildelementes (in schwarzer Darstellung) an der ersten Bildelementen-Position p1 der Aufzeichnungsträger-Rasterbild-Teilfläche B1' (durch einen "fehlenden" ) Lichtstrahl.

Auf diese Art und Weise werden wahrend des ersten Zeitabschnittes T1 gleichzeitig für die p1 Positionen aller Aufzeichnungsträger-Rasterbild-Teilflächen die Bildelemente aufgezeichnet.

In den an T1 anschließenden zweiten Zeitabschnitt T2 werden mittels des Steuermusters ST2 alle Bildelemente an der p2 Position aller Aufzeichnungsträger-Rasterbild-Teilflachen A1', B1', C1',...A2',...aufgezeichnet.

Die Steuerbefehle für das Steuermuster ST2 leiten sich (analog zu ST1) aus dem "an"- oder "aus"-Status der Rasterpunkte an der r2 Position der Computer-Rasterbild-Teilflächen A1, B1, C1, ...A2,...ab.

Um sicherzustellen, daS die Aufzeichnung der Bildelemente für die zweiten Bildelemente-Positionen p2 positionsgerecht (unter den p1 Positionen) erfolgt, wird wie bereits erwähnt die Loch-Matrix gegenüber dem Aufzeichnungsträger entsprechend verschoben.
(Ebenso kann auch der Aufzeichnungsträger gegenüber der Lochmatrix verschoben werden.)
Für jeden Zeitabschnitt mit dem dazugehörigen Steuer-Muster folgt die erforderliche Verschiebung der willkürlich festgelegten Folge r1 bis r9 der Rasterpunkte in den Computer-Rasterbild-Teilflächen, welche gleich der Folge der Bildelement-Positionen p1 bis p9 in den Aufzeichnungsträger-Rasterbild-Teilflächen ist.

Das Steuermuster ST9 steuert analog die Aufzeichnung der Bildelemente an den p9 Positionen.

Den 3x3=9 Rasterpunkten einer Computer-Rasterbild-Teilfläche A1 oder B1 etc. sind 3x3=9 Bildelemente einer Aufzeichnungsträger-Rasterbild-Teilfläche A1'oder B1' etc. zugeordnet. Die Aufzeichnung aller Bildelemente erfolgt in den 9 Zeitabschnitten T1-T9 mit den dazugehörenden Steuer-Mustern ST1 bis ST9.
Jeder Zeitabschnitt ist durch ein zugehöriges Steuer-Muster und durch eine entsprechende gegenseitige Verschiebung von Lochmaske und Aufzeichnungsträger gekennzeichnet. Diese Verschiebung gewährleistet die positionsgerechte Anordnung der Bildelemente.

Da die Aufzeichnung gleichpositionierter Bildelemente in allen Aufzeichnungsträger-Rasterbild-Teilflächen gleichzeitig erfolgt, wird mit dem Zeitabschnitt T9 die Aufzeichnung des gesamten Aufzeichnungsträger-Rasterbildes abgeschlossen.

### Die Lochmatrix

Die Lochmatrix erfordert für ein hohes Auflösungsvermögen des aufzuzeichnenden Rasterbildes eine äußerst präzise Herstellung, insbesondere hinsichtlich kleinster Öffnungen im Mikrometer -Bereich und hinsichtlich einer exakten matrixgerechten Anordnung der Öffnungen mit Abständen von ca. 100 Mikrometern.

Als Material für die Lochmatrix kann vorzugsweise eine fotolackbeschichtete mit einer dünnen Chromschicht versehene Glasplatte verwendet werden.
Zur Herstellung der Öffnungen wird der Fotolack mittels Elektronen-Strahlen nach dem bekannten sogenannten E-Beam (Elektronen-Strahl)-Verfahren an den Stellen künftiger Öffnungen belichtet: nach entsprechender Entwicklung wird die Chromschicht an diesen Stellen chemisch weggeätzt.

Je kleiner die Öffnungen in der Lochmatrix sind, um so höher ist die Auflösung des aufzuzeichnenden Rasterbildes.

Die Öffnungen können je nach Anforderung z.B. eine runde oder (wie in FIG. 1 dargestellt) auch eine quadratische Form erhalten. Da die Elektronenstrahlen einer äußerst präzisen variierbaren Steuerung unterliegen, ist es möglich, zum Ausgleich optischer Abbildungsverzerrungen entsprechende Lochgestaltungen vorzunehmen, z.B. eine von der Kreisform abweichende elliptische Gestaltung zu bewirken.

Bei Verwendung kreisförmiger Öffnungen in der Lochmatrix lassen sich je nach Überlappungsgrad der aufgezeichneten Bildelemente relativ glatte Konturen des Rasterbildes erzielen.

### Licht-Steuer-Matrizen

Für die Licht-Steuer-Matrix (1) können verschiedene handelsübliche Anordnungen verwendet werden:
a) eine LCD-Matrix ( gemäß des in FIG. 1 dargestellten Ausführungsbeispieles) , z.B. vom Typ LDK 036 T - 20 AM-LCD 2,8 Zoll der Firma FLAT PANEL DISPLAY COMPANY . Eindhoven / Holland. Jedes lichtsteuernde Element dieser LCD-Matrix kann selektiv elektrisch derart angesteuert werden, daß es für Durch-Licht durchlässig oder undurchlässig wird.
   Verfeinerte Steuerungen ermöglichen es, den Durchlässigkeitsgrad für (Durch-)Licht zu variieren. Dadurch können örtliche Intensitäts- oder Lichtmengenschwankungen des die Matrix beaufschlagenden Lichtes durch eine korrigierende Steuerung ausgeglichen werden.
   Handelsübliche Flüssigkristall-Matrixen haben eine Anzahl von 640 x 480 bis zu 1024 x 768 lichtsteuernden Elementen, sie können für Licht in den Wellenbereichen von 380 bis 700 nm (Nanometer) verwendet werden.
   Sie sind in Diagonal-Abmessungen von 2,8 Zoll bis zu 5,8 Zoll verfügbar (1 Zoll = 2,4 cm).
b) Kippspiegel-Elemente-Halbleiter-Chips , sogenannte digital light processing devices oder digital mirror devices der Fa. Texas Instruments, bei denen basierend auf Halbleiter-Technologie matrixartig angeordnete elektrostatisch steuerbare Kippspiegelelemente in zwei unterschiedliche Kippstellungen (+,- 10° ) gebracht werden können.
   Anordnungen dieser Art arbeiten mit Auflicht, das per Spiegelelement in zwei unterschiedliche Richtungen reflektiert wird.

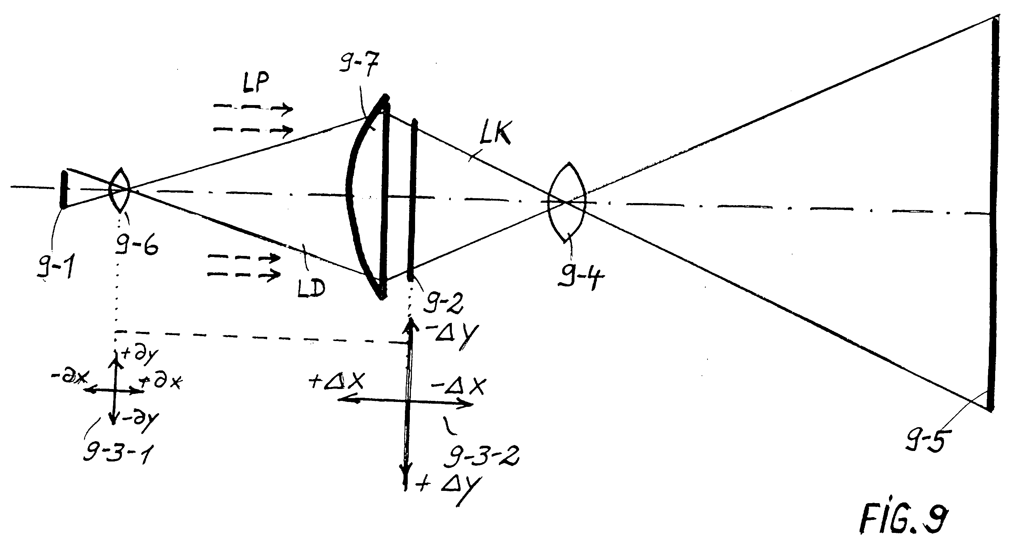

Jedem Spiegel ist ein Lochmatrix-Feld mit einer Öffnung zugeordnet, durch die je nach Stellung des Kippspiegels reflektiertes Licht hindurchtritt oder nicht.
Der durch diese Öffnung hindurchtretende Lichtstrahl bewirkt auf dem Aufzeichnungsträger die Aufzeichnung eines Bildelementes.
Eine Lichtmengensteuerung des durch eine solche Öffnung tretenden Lichtes ist dadurch möglich, daß durch entsprechende zeitliche Steuerung des Kippspiegelelmentes nur ein Teil des reflektierten Lichtes durch diese öffnung gelangt.
Handelsübliche Kippspiegelelemente- Halbleiter-Chips weisen bei einer Fläche von z.B. 13,6 mm hoch 2 und bei einem Abstand der Kippspiegel-Elemente von 17 mikrometer eine äußerst hohe Dichte von Kippspiegel-Elementen (800x600 Stück) auf.
Zur Anpassung des relativ kleinen Chips an die vergleichsweise größere Lochmatrix ( ca 10 x 10 cm hoch 2) wird wie in Zusammenhang mit der Darstellung in FIG. 9 näher erläutert, zwischen Kippspiegel-Halbleiter-Chip und Lochmatrix ein vergrößerndes Objektiv 9-6 geschaltet.

Die Beaufschlagung einer LCD-Matrix kann mit Dauerlicht oder mit kurzzeitigen Xenon oder Laser-Blitzen erfolgen: die Beaufschlagung des Kippspiegel-Halbleiter-Chips erfolgt im Blitzbetrieb.

Desweiteren ist es möglich, für die Licht-Steuer-Matrix ein Feld von lichtemittierenden Elementen, z.B. Licht-Dioden, zu verwenden., die je nach Status des ihnen zugeordneten Rasterpunktes in der Computer-Rasterbild-Teilfläche lichtemittierend oder nicht lichtemittierend gesteuert werden.

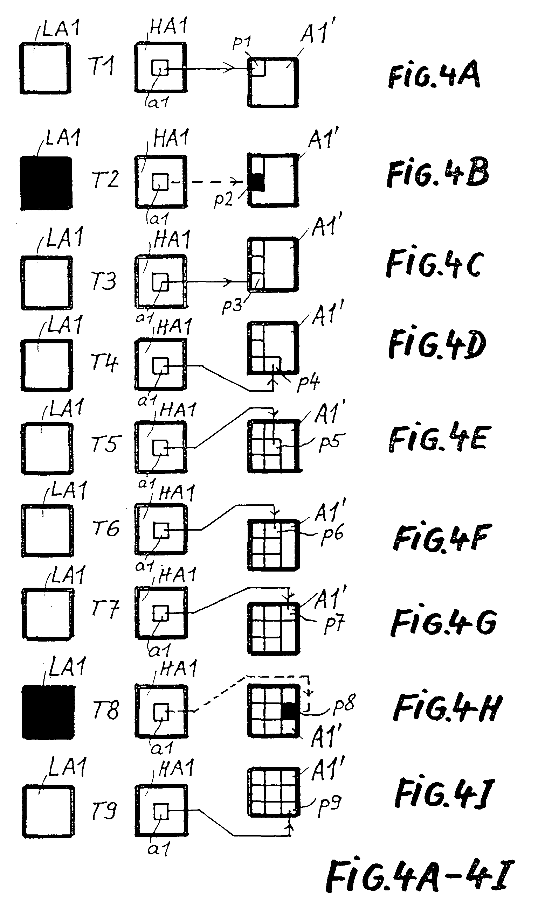

Die Figurenfolge FIG. 4A bis FIG. 4I zeigt eine schematische Darstellung des Steuerzustandes des Lichtsteuer-Elementes LA1 während der Zeitabschnitte T1 bis T9 in Verbindung mit der diesem Element LA1 zugeordneten Öffnung a1 des Lochmatrix-Feldes HA1 und dem durch diese Öffnung hindurchtretenden ( bzw. nicht hindurchtretenden) die Aufzeichnung eines Bildelementes bewirkenden Lichtstrahles.
Diese Figuren-Folge dient der ausführlichen und übersichtlichen Darstellung der Aufzeichnung der Bildelemente in allen Bildelemente-Positionen p1-p9 einer Aufzeichnungs-Rasterbild-Teilfläche A1' entsprechend dem "an"- oder "aus"-Status eines Rasterpunktes in den Positionen r1 - r9 der Computer-Rasterbild-Teilfläche A1.

Dieser Teilfläche A1 ist das lichtsteuernde Element LA1 sowie die Aufzeichnungsträger-Rasterbild-Teilfläche A1' zugeordnet.

### FIG. 4A

Der Rasterpunkt an Position r1 in der Computer-Rasterbild-Teilfläche A1 (FIG. 1) ist in einem "an"-Status (weißer Kreis); dementsprechend wird das lichtsteuernde Element LA1 auf lichtdurchlässig (weiße Darstellung) gesteuert.
Der durch die Öffnung a1 des Lochmatrix-Feldes HA1 (FIG.1) hindurchtretende Lichtstrahl la1 (ausgezogener Pfeilweg) zeichnet in der Position p1 der Aufzeichnungsträger-Rasterbild-Teilfläche A1' ein Bildelement (weiß dargestellt ) auf.

### FIG. 4 B

Lochmatrix und der Aufzeichnungsträger 5 sind derart gegeneinander verschoben, daß an der Position p2 der Teilfläche A1' im Zeitabschnitt T2 ein Bildelement aufgezeichnet werden kann.
Der Rasterpunkt an Position r2 in Teilfläche A' ist in einem "aus"-Status (schwarzer Kreis) ; dementsprechend wird das lichtsteuernde Element LA1 auf lichtsperrend (schwarze Darstellung) gesteuert.
Durch die Öffnung a1 des Lochmatrix-Feldes HA1 tritt kein Lichtstrahl hindurch:in der Position p2 der Teilfläche A1' wird durch den fehlenden Lichtstrahl (gestrichelter Pfeilweg) kein Bildelement (schwarz dargestellt ) "aufgezeichnet".

Die Aufzeichnung der Bildelemente an den Positionen p3 bis p8 der Teilfläche A1' erfolgt analog und wird deshalb nicht weiter erläutert.

### FIG. 4I

Lochmatrix und der Aufzeichnungsträger 5 sind derart gegeneinander verschoben, daß an der Position p9 der Teilfläche A1' im Zeitabschnitt T9 ein Bildelement aufgezeichnet wird.
Der Rasterpunkt an Position r9 in Teilfläche A1 ist in einem "an"-Status: dementsprechend
wird das lichtsteuernde Element LA1 auf lichtdurchlässig (weiße Darstellung) gesteuert.
Durch die Öffnung a1 des Lochmatrix-Feldes HA1 tritt ein Lichtstrahl hindurch (ausgezogener Pfeilweg) :in der Position p9 der Teilfläche A1' wird durch diesen Lichtstrahl ein Bildelement (weiß dargestellt ) "aufgezeichnet".

Da die Aufzeichnung der gleichpositionierten Bildelemente ( in allen p1 Positionen, oder in allen p2-Positionen etc.) in allen Aufzeichnungsträger-Rasterpunkt-Teilflächen gleichzeitig erfolgt , ist mit Ablauf des Zeitabschnittes T9 die Aufzeichnung aller Bildelemente in allen Teilflächen und damit die Aufzeichnung des gesamten Rasterbildes abgeschlossen.

FIG. 5A zeigt eine schematische ausschnittsweise Darstellung eines mit einem bestimmten Abbildungsmaßstab aufgezeichneten Rasterbildes und
FIG.5B eine schematische Darstellung des Rasterbildes gemäß FIG. 5A mit einem Abbildungsmaßstab 1:3,

In FIG. 5A sind auszugsweise drei nebeneinanderliegende Aufzeichnungsträger-Rasterbild-Teilflächen A1', B1', C1' dargestellt.
In A1' sind in den Positionen p2 und p8, in B1' sind in den Positionen p1, p2, p4, p5 und p8 und in C1' sind in den Positionen p1, p5 und p9 "fehlende" Bildelemente schwarz dargestellt.

Durch Zwischenschaltung eines Verkleinerungs-Objektives 4 (FIG. 1) mit dem Verkleinerungsfaktor 1:3 zwischen Lochmatrix 2 und Aufzeichnungsträger 5 wird gemäß Darstellung in FIG. 5B ein auf ein Drittel verkleinertes Aufzeichnungsträger-Rasterbild (im Vergleich zu FIG. 5A) bewirkt. Für dieselbe Längeneinheit LE ergibt sich dadurch eine dreimal höhere Rasterbild-Auflösung : Gemäß FIG. 5A umfaßt die Längeneinheit LE nur 3, gemäß FIG. 5B jedoch 9 Bildelemente.

FIG. 6A zeigt eine schematische Darstellung verschiedener nicht überlappender kreisrunder Bildelemente zur Ausbildung einer Randkontur RC,

FIG. 6B eine schematische Darstellung verschiedener einander um 50 % überlappender kreisrunder Bildelemente zur Ausbildung einer Randkontur RF.

Es wurde bereits erwähnt, daß "Druckpunkte" (Bildelemente) des Aufzeichnungsträgers unterschiedliche Form haben können: rund, quadratisch etc., je nach Form der Öffnungen in der Lochmatrix.
Die Bildelemente können auch einander überlappen, um bestimmten Konturanforderungen zu genügen.
In FIG.6A ist dargestellt, wie es bei einer bestimmten Anordnung nicht überlappender kreisrunder Bildelemente zur Ausbildung einer groben Randkontur RC kommt.
FIG. 6B hingegen zeigt die Ausbildung einer feineren Randkontur RF bei einander um 5o % überlappenden ebenfalls kreisrunden Bildelementen.

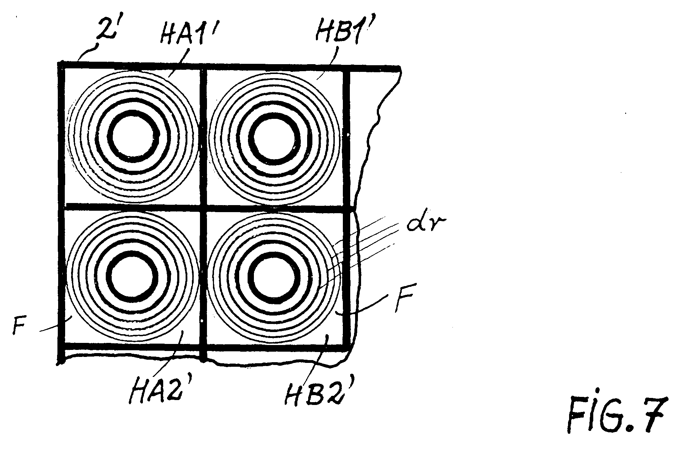

FIG. 7 zeigt eine auszugsweise Aufsicht auf eine Lochmatrix 2' , auf deren einzelnen Feldern HA1', HB1', HA2', HB2' sogenannte Fresnel-Beugungsgitter F angeordnet sind.
(Zur Erläuterung sei zunächst bemerkt, daß das gemäß FIG.1 von einem lichtsteuernden Element (z.B. LA1) ausgehende Licht auf das diesem Element zugeordnete Loch-Matrix-Feld HA1 fällt und daß davon nur der Teil dieses Lichtes , welcher auf die Öffnung a1 dieses Feldes trifft, als Lichtstrahl la1 die Aufzeichnung eines Bildelementes an der Bildelemente-Position p1 bewirkt.
Das außerhalb der Öffnung im Feld HA1 auftreffende Licht hat an der Aufzeichnung des Bildelementes keinen Anteil: es geht quasi verloren.
Dieses verlorengehende Licht wird jedoch durch folgende Maßnahmen für die Aufzeichnung des Bildelementes ausgenutzt: Dabei wird dieses Licht veranlaßt, auch die Öffnung a1 zu passieren, um an der Aufzeichnung des Bildelementes teilzuhaben:
a) Anbringung einer (nicht dargestellten) lichtfokussierenden Linse auf jedem Loch-Matrix-Feld, durch die das auf dieses Lochmatrix-Feld auftreffende Licht durch die Öffnung a1 geleitet wird. Anordnungen dieser Art, sogenannte Linsen-Felder, sind allerdings nur mit großem Aufwand zu realisieren.
b) Anbringung eines sogenannten Fresnel'schen Beugungsgitter F auf jedem Loch-Matrix-Feld. Es ist bekannt, eine Lichtbündelung durch Einsatz eines auf dem Huygenschen Prinzip beruhenden Fresnel-Beugungsgitters zu bewirken ( derartige Beugungsgitter sind als sogenannte Fresnel-zone-plates in der Druckschrift "OPTICS", Hecht & Zajac, 1974 by Addison-Wesley Publishing Company, beschrieben.
   Ein solches lichtwellenlängenspezifisches Beugungsgitter wird durch ebene konzentrische auf lichtdurchlässiges Trägermaterial aufgebrachte Ringe aus Chrom oder Photoemulsionen gebildet.
   Das Beugungsgitter bewirkt, daß auftreffendes Licht durch die in der Mitte dieses Gitters angeordnete ( hier angenommene runde ) Öffnung des Loch-Matrix-Feldes HA1', HB1', HA2', HB2', geleitet wird.

Der auf die Ringe auftreffende Lichtanteil geht durch Reflektion verloren, es sei, die Ringe bestehen aus einem Material, welches eine Phasenverschiebung des auftreffenden Lichtes um die halbe Lichtwellen-Wellenlänge bewirkt (o. g. Fundstelle , Seite 376,"phase reversal zone plate").
In diesem Fall wird auch der auf die Ringe auftreffende Teil des Lichtes durch die Öffnung des Lochmatrix -Feldes geleitet.
Der Einsatz Fresnelscher Beugungsgitter ist nach dem Stand der Technik für bestimmte Anwendungszwecke (z.B. Telekommunikation, Laser-Fokussierung ) bekannt.
Diese Beugungsgitter können auch eine von der Kreisform abweichende z.B. elliptische Gestaltung erfahren, um Korrekturen von optischen Verzerrungen der verwendeten Linsensysteme zu bewirken (Ausgleich der Lichteinfallswinkel bei nicht kollimiertem Licht).

### Verschiebeeinrichtung

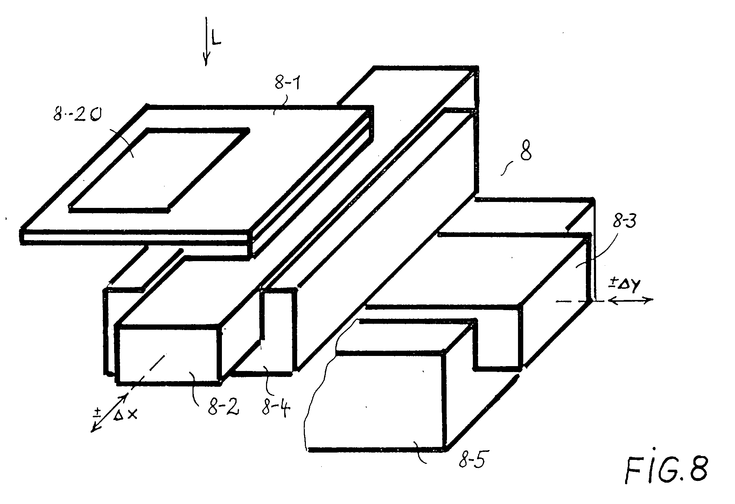

FIG. 8 zeigt eine schematische perspektivische Darstellung einer X/Y-Tisch-Verschiebeeinrichtung für die Lochmatrix.

Zur Verschiebung der Loch-Matrix 8-20 (in beiden Kooordinatenrichtungen) gegenüber dem Aufzeichnungsträger ist die Lochmatrix 8-20 in einer Halterung 8-1 angeordnet,welche mit der X/Y-Tisch-Verschiebeeinrichtung 8 verbunden ist. Diese Verschiebeeinrichtung 8 besteht aus zwei Schlitten, von denen der eine (X-Schlitten) 8-2 in X-Richtung und von denen der andere (Y-Schlitten) 8-3 in Y-Richtung schrittweise oder auch kontinuierlich mit höchster Präzision hin und her bewegt werden kann.

Der X-Schlitten 8-2 wird in dem Schlittenbett 8-4 , der Y-Schlitten 8-3 in dem Schlittenbett 8-5 geführt.
Das Schlittenbett 8-4 ist mit dem Schlitten 8-3 verbunden.

Da die maximalen Verschiebestrecken des X- und Y-Schlittens relativ gering sind ( sie liegen in der Größenordnung der Abmessungen eines (oder einiger) Lochmatrix-Feldes, können für eine solche Verschiebeeinrichtung höchste Toleranzanforderungen eingehalten werden.
Bei größeren Verschiebestrecken, wie sie bei dem benannten Stand der Technik auftreten, bei dem der Belichtungskopf über die gesamte Aufzeichnungsträgerfläche bewegt werden muß, sind hohe Toleranzanforderungen zur präzisen Positionierung des Belichtungskopfes ungleich schwieriger zu beherrschen.

Der Schlittenantrieb erfolgt z.B. in an sich bekannter Weise über Schrittschaltmotoren (nicht dargestellt) mit einem Untersetzungsgetriebe oder direkt mit Linearmotoren.

Die Ansteuerung der Schrittschaltmotoren erfolgt computerprogrammgesteuert durch elektrische Impulse. Für jedes Steuer-Muster ST1 - ST9 bzw. für jeden Zeitabschnitt T1- T9 wird die Lochmatrix 2 gegenüber dem feststehenden Aufzeichnungsträger 5 in eine bestimmte Verschiebeposition gebracht, um eine positionsgerechte Aufzeichnung der Bildelemente zu gewährleisten.

Für Verschiebungen im Mikrometer-Bereich, wie sie z.B. bei Verwendung eines Kippspiegel-Elemente-Halbleiter-Chips erforderlich sind, werden zweckmäßigerweise aus Piezo-Kristall-Elementen bestehende Verschiebeeinrichtungen verwendet.
Diese Elemente erfahren beim Anlegen einer elektrischen Steuerspannung in bekannter Weise eine für die Verschiebung erforderliche definierte Längenänderung.
Die Verschiebesteuerung erfolgt wiederum computerprogrammgesteuert.

Im einfachsten (nur theoretisch angenommenen) Fall (Fläche des Kippspiegel-Elemente-Halbleiter-Chips = Fläche der Lochmatrix) und bei Verwendung parallelen Lichtes ohne Zwischenschaltung irgendwelcher Objektive könnten Chip und Lochmatrix gemeinsam gegenüber dem Aufzeichnungsträger verschoben werden.

Unter Berücksichtigung der aktuellen Größenverhältnisse des sehr kleinen Kippspiegelelemente-Halbleiter-Chips und der größeren Lochmatrix wird zwischen beiden ein Vergrößerungsobjektiv 9-6 (FIG. 9) angeordnet, um die kleinere Chipfläche an die größere Lochmatrix-Fläche anzupassen.
Es ist vorstellbar, alle drei Einheiten Chip / Objektiv/Lochgemeinsam zu verschieben, um eine positionsgerechte Aufzeichnung der Bildelemente zu erreichen.
Eine derartige Lösung wäre jedoch mit dem Nachteil behaftet, daß bei jedem Verschiebeschritt das mit einer relativ großen Masse behaftete Objektiv mitbewegt werden müßte. Aus diesem Grunde ist es wie im Zusammenhang mit FIG. 9 nachstehened beschrieben vorteilhaft, das Objektiv nicht in die Verschiebeeinrichtung mit einzubeziehen:
Das Objektiv bleibt unbewegt fixiert. Verschoben werden lediglich das leichte Kippspiegel-Elemente-Halbleiter-Chip und die relativ leichte Loch-Matrix gegenüber dem Aufzeichnungsträger.

FIG. 9 zeigt eine schematische Darstellung einer erfindungsgemäßen Anordnung, welche einen Kippspiegel-Elemente-Halbleiter-Chip 9-1 und Objektive 9-6, 9-7 und 9-4 enthält.

Wie bereits erwähnt kann unter Zwischenschaltung eines entsprechenden Objektivs zwischen Loch-Matrix und Aufzeichnungsträger der Abbildungsmaßstab des Aufzeichnungsträger-Rasterbild verändert werden.

Eine verkleinerte Abbildung gestattet eine Erhöhung des Auflösungsvermögens. Eine physikalische Grenze des Auflösungsvermögens ist einerseits durch die Auflösungsfähigkeit des Aufzeichnungsträgers und andererseits durch die Lichtwellenlänge und durch die Eigenschaften des optischen Systems gegeben.

Um in der Anordnung nach FIG. 9 die Größe des maßstabsbestimmenden Objektives 9-4 (je größer, je teurer) zu minimieren, wird vorzugsweise die Loch-Matrix 9-2 nicht mit parallelem Licht LP (gestrichelte Darstellung ), sondern mit von einer Kondensor-Linse 9-7 ausgehenden konvergierenden Licht LK beaufschlagt`

Bei Verwendung parallelen Lichtes müßte das maßstabsbestimmende Objektiv 9-4 eine der Lochmatrix 9-2 entsprechende Größe haben, während im Falle konvergierenden Lichtes LK das Objektiv 9-4 kleiner sein kann.
Der Aufzeichnungsträger ist mit 9-5 gekennzeichnet.
Wie bereits erwähnt, kann die Lichtausnutzung wesentlich durch sogenannte Linsen - Felder oder den Einsatz von Fresnel-Beugungsgittern ( FIG. 7) erhöht werden.

Bei Verwendung eines Kippspiegel-Elementen-Halbleiter-Chips 9-1 wird zur Angleichung der relativ kleinen Chipfläche an die relativ dazu große Loch-Matrix-Fläche ein Vergrößerungsobjektiv 9-6 zwischengeschaltet. Das von diesem Objektiv 9-6 ausgehende divergierende Licht LD wird von der Kondensor-Linse 9-7 in konvergierendes Licht LD umgewandelt.

Für eine bildelemente-positionsgerechte Verschiebung sind jedoch die seiten- und höhenverkehrende Wirkung des Objektives und dessen vergrößernde Wirkung dahingehend zu berücksichtigen, daß das Chip und die Loch-Matrix in miteinander synchronisierter Weise in unterschiedlich großen Schritten gegeneinander bewegt werden müssen.

Da durch die geringen Abmessungen des Spiegelelemente-Halbleiter-Chips in Verbindung mit dem Vergrößerungsfaktor des Objektives 9-6 die Verschiebeschritte für diesen Chip und für die Lochmatrix äußerst klein sind (sie liegen im Bereich von 0,1 Mikrometern), sind äußerst präzis arbeitende Verschiebeeinrichtungen erforderlich.

Diese Verschiebeeinrichtungen sind in FIG.9 durch kartesische Koordinatenkreuze 9-3-1 und 9-3-2 symbolisiert angedeutet. Sie sind aufeinander abgestimmt; ihre Verschiebungsschritte (±∂x; ±∂y; ±Δx; ±Δy ) können unterschiedlich groß sein. Ihre Ansteuerung erfolgt computerprogrammgesteuert.

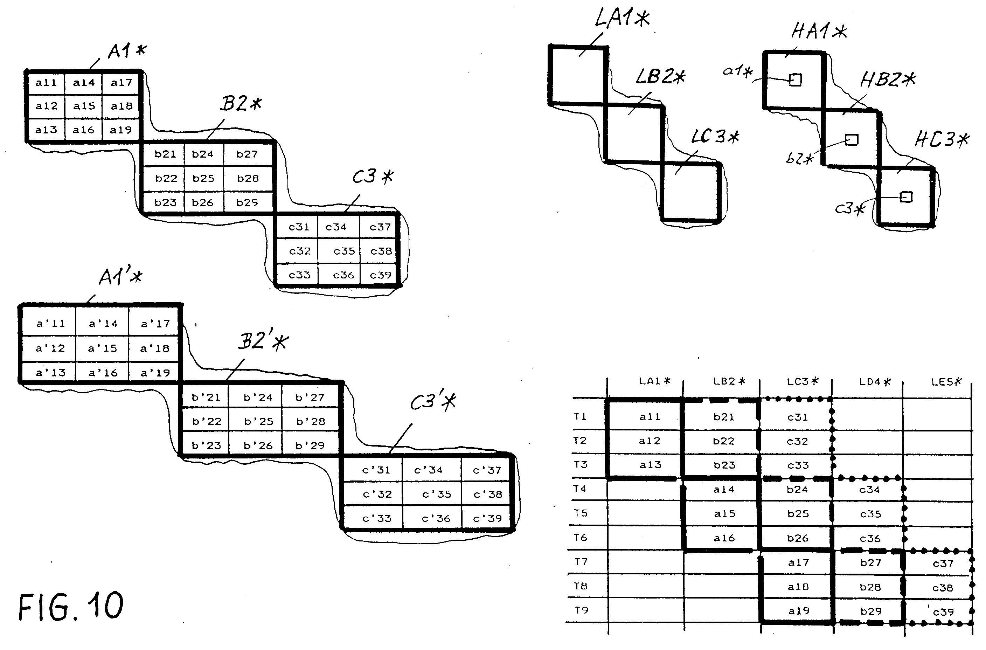

FIG.10 zeigt eine schematische Darstellung eines Verschiebungsbereiches der Lochmatrix, der sich über mehrere Lochmatrix-Felder erstreckt und bei dem die Rasterpunkte einer Computer-Rasterbild-Teilfläche mehreren benachbarten lichtsteuernden Elementen der Licht-Steuer-Matrix zugeordnet sind

Die Rasterpunkte der Computer-Rasterbild-Teilflächen A1*, B2*, C3* sind zu ihrer Unterscheidung mit a11-a19, b11-b19 und c11-c19 gekennzeichnet.

In den zugehörigen Aufzeichnungsträger-Rasterbild-Teilflächen A1'*, B2'*, C3'*, sind die den Rasterpunkten entsprechenden Bildelemente mit a'11-a'19, b'11-b'19, c'11-c'19 gekennzeichnet.

Aus der tabellarischen Aufstellung ist zu ersehen, welche Rasterpunkte in welchem Zeitabschnitt welchem lichtsteuernden Element zugeordnet sind.

Bsp.: Im Zeitabschnitt T1 ist der Rasterpunkt a11 dem lichtsteuernden Element LA1*, der Rasterpunkt b11 dem lichtsteuernden Element LB2*, der Rasterpunkt c11 dem lichtsteuernden Element LC3* zugeordnet.

Ab Zeitabschnitt T4 ändert sich die Zuordnung dahingehend, daß nunmehr die Rasterpunkte a14- a16 der Computer-Rasterbild-Teilfläche A1* nicht mehr dem lichtsteuernden Element LA1*, sondern LB2* zugeordnet sind; analoges gilt für die Rasterpunkte b24-b26 und c34-c36.

Ab Zeitabschnitt T6 ändert sich die Zuordnung nochmals: die Rasterpunkte a16-a19 der Computer-Rasterpunkt-Teilfläche A1* sind jetzt dem lichtsteuernden Element LC3* zugeordnet, analoges gilt für die Rasterpunkte a17-a19, b27-b29 und c37-c39.

Bei der bisherigen Betrachtung im Zusammenhang mit der Darstellung gemäß FIG. 1 wurde vorausgesetzt, daß die Verschiebung der Lochmatrix gegenüber dem Aufzeichnungsträger derart erfolgt, daß der die Öffnung a1 des Lochmatrix-Feldes HA1 passierende Lichtstrahl nacheinander auf alle Bildelemente-Positionen p1-p9 ausgerichtet wird.

Würde bei dieser Verschiebung der Loch-Matrix wegen eines Defektes ein bestimmtes lichtsteuerndes Element der LCD-Matrix ausfallen, ergäbe sich im Aufzeichnungsträger-Rasterbild an der Stelle der Aufzeichnungsträger-Rasterbild-Teilfläche, welche dem defekten lichtsteuernden Element zugeordnet ist, ein maximal neun Bildelemente umfassender Aufzeichnungsfehler.

Um bei Ausfall eines lichtsteuernden Elementes den Aufzeichnungsfehler nicht so konzentriert auftreten zu lassen, wird der Verschiebebereich der Loch-Matrix vergrößert, wobei die Rasterpunkte einer Computer-Rasterbild-Teilfläche gruppenweise jeweils einem anderen lichtsteuernden Element zugeordnet werden.

Wie aus FIG. 10 zu entnehmen ist, sind die Rasterpunkte a11, a12, a13 in den Zeitabschnitten T1,T2, T3 dem lichtsteuernden Element LA1*, die Rasterpunkte a14, a15 und a16 in den Zeitabschnitten T4, T5 und T6 dem lichtsteuernden Element LB2* und die Rasterpunkte a17, a18 und a19 in den Zeitabschnitten T7, T8 und T9 dem lichtsteuernden Element LC3* zugeordnet.

Analoges gilt für die Rasterpunkte b21-b23 für die Zeitabschnitte T1 bis T3 in Zuordnung zum lichtsteuernden Element LB2* etc.

Bei einer solchen wechselnden Zuordnung der Rasterpunkte einer Computer-Rasterbild-Teilfläche zu verschiedenen benachbarten lichtsteuernden Elementen ( hier in Diogonal-Abfolge), wird zur Aufzeichnung der den Rasterpunkten entsprechenden Bildelemeneten der Verschiebungsbereich der Loch-Matrix gegenüber dem Aufzeichnungsträger wie folgt vergrößert.

Die Loch-Matrix wird bei (feststehender LCD-Matrix) so verschoben, daß für den Zeitabschnitt T1 die Öffnung a1* des Loch-Matrix-Feldes HA1* zur Aufzeichnung des dem Rasterpunkt a11 entsprechenden Bildelementes a'11 auf dessen Position gerichtet ist etc. bis für den Zeitabschnitt T4 zur Aufzeichnung des dem Rasterpunkt a14 entsprechenden Bildelementes a'14 die Öffnung b2* des Loch-Matrix-Feldes HB2* auf die Position von a'14 gerichtet ist usw.
(Hinweis: die Loch-Matrix muß zu diesem Zweck so verschoben werden, daß die Öffnung a1* nunmehr auf das lichtsteuernde Element LB2* und nicht mehr auf LA1* ausgerichtet ist).
Analog hierzu muß im Zeitabschnitt T7 die Öffnung c3* des Loch-Matrix-Feldes HC3* auf die Position des Bildelementes a17 ausgerichtet sein.

Zur Aufzeichnung aller Bildelemente ist also eine treppenartige Verschiebung der Loch-Matrix über drei lichtsteuernde Elemente erforderlich. (Es sind auch andere als diagonale Verschiebefolgen denkbar).

Der vorstehend beschriebene größere Verschiebebereich ist mit dem Vorteil verbunden, daß bei Ausfall eines lichtsteuernden Elemente (z.B. LA1*) nur 3 Bildelemente (a11 - a13) in der Aufzeichnungsträger-Rasterbild-Teilfläche A1'* fehlerhaft sein können und nicht alle, da die anderen Bildelemnte a14 - a19 mittels anderer lichtsteuernder Elemente ( LB2*, LC3*) als LA1* aufgezeichnet werden.

Bei der Verwendung monochromatischen Lichtes ist zu beachten
a) für welche Wellenlänge des auftreffenden Lichtes der photoempfindliche Teil des Aufzeichnungsträgers (Photo-emulsion, -resist, -lack, Selen) empfindlich ist,
b) in welchem Wellenlängenbereich die LCD-Matrizen einzusetzen sind . Bisher bekannte LCD-Matrizen arbeiten im Bereich sichtbaren Lichtes , nicht aber im UV (Ultraviolettbereich) zufriedenstellend,
c) Kippspiegel-Elemente-Halbleiter-Chips hingegen lassen sich außer im sichtbaren Bereich des Lichtes auch gut im ultravioletten Bereich einsetzen.

Es sei an dieser Stelle ausdrücklich betont, daß nach der Erfindung auch Licht (als elektromagnetische Wellenstrahlung) mit kürzerer Wellenlänge als in seinem sichtbaren Bereich verwendet werden kann. Selbst Röntgenstrahlen sind anwendbar, auch wenn der apparative Aufwand für die diese Strahlung steuernden Elemente und Linsensysteme sehr hoch ist.

Die Erfindung kann in den verschiedensten Anwendungsgebieten benutzt werden, welche die Aufzeichnung eines Rasterbildes auf einem lichtempfindlichen Aufzeichnungsträger voraussetzen:
So z.B. für die Erstellung von Foto-Vorlagen für gedruckte Schaltkarten, für den Siebdruck, etc.
Es sind auch Anwendungen denkbar, in denen der lichtempfindliche Aufzeichnungsträger nicht aus einem chemisch zu entwickelnden Film besteht, sondern aus einem Material, welches bei Belichtung elektrische Aufladungen erfährt, die wiederum ladungssensitiven abdruckfähigen Toner anziehen bzw. abstoßen.

## Patentansprüche

1. Verfahren zur Aufzeichnung eines Rasterbildes auf einen ebenen Aufzeichnungsträger,
bei dem ein computergespeichertes aus Rasterpunkten bestehendes Rasterbild in steuerbare rasterpunktbezogene Lichtstrahlen umgesetzt wird,
durch die auf dem Aufzeichnungsträger den Rasterpunkten entsprechende Bildelemente aufgezeichnet werden,
dadurch gekennzeichnet, daß
das Computer-Rasterbild matrixförmig in gedachte Computer-Rasterbild-Teilflächen (A1, B1, C1,...) aufgeteilt wird,
das Aufzeichnungsträger-Rasterbild matrixförmig in gedachte Aufzeichnungsträger-Rasterbild-Teilflächen (A1', B1', C1', ) aufgeteilt wird,
die Teilflächen des Computer- und des Aufzeichnungsträger-Rasterbildes einander zugeordnet werden,
die Computer-Rasterbild-Teilflächen (A1, B1, C1, ) matrixförmig in gedachte n Rasterpunktpositionen (r1 - r9) und
die Aufzeichnungsträger-Rasterbild-Teilflächen (A1', B1', C1', ..) matrixförmig in gedachte n Bildelement-Positionen (p1 - p9) aufgeteilt werden,
die Bildelement-Positionen (p1 -p9) den Rasterpunkt-Positionen (r1- t9) zugeordnet werden,
die Aufzeichnung der den Rasterpunkten entsprechenden Bildelemente in q (q=1-n) aufeinanderfolgenden Zeitabschnitten Tq (q=1-n) derart erfolgt,
daß im q.ten Zeitabschnitt (q=1-n) alle Bildelemente an der q.ten Bildelemente-Position der Aufzeichnungsträger-Rasterbild-Teilflächen (A1', B1', C1', ...) gleichzeitig aufgezeichnet werden,
eine Loch-Matrix (2) mit matrixförmig angeordneten Lochmatrix-Feldern (HA1, HB1, HC1, ...) mit jeweils einer Öffnung (a1, b1, c1, ...) zum Durchtritt eines Lichtstrahles (la1, lc1, ...) zur Aufzeichnung eines Bildelementes für den q.ten Zeitabschnitt derart verschoben wird, daß der Lichtstrahl jeweils auf die q.te Bildelement-Position ausgerichtet ist.

2. Verfahren nach Anspruch 1,
dadurch gekennzeichnet, daß
bei einander zugeordneten Computer- (A1, B1, C1, ...) und Aufzeichnungsträger-Rasterbild-Teilflächen (A1', B1', C1', ...) die Aufzeichnung aller Bildelemente einer Aufzeichnungsträger-Rasterbild-Teilfläche (A1') nacheinander durch den Lichtstrahl (la1) erfolgt, der die Öffnung (a1) des dieser Teilfläche (A1') zugeordneten Lochmatrix-Feldes (HA1) passiert.

3. Verfahren nach Anspruch 1,
dadurch gekennzeichnet, daß
bei einander wechselnder Zuordnung der Computer- (A1*, B1*, C1*, ...) und Aufzeichnungsträger-Rasterbild-Teilflächen (A1'*, B1'*, C1'*, ...) zu den Lochmatrix-Feldern (HA1*, HB1*, HC1*, ...) die Aufzeichnung aller Bildelemente einer Aufzeichnungsträger-Rasterbild-Teilfläche (A1'*) nacheinander durch Lichtstrahlen erfolgt, die die Öffnungen (a1*, b2*, c3*) verschiedener in ihrer Reihenfolge willkürlich vorgegebener Lochmatrix-Felder (HA1*, HB2*, HC3*) passieren.

4. Verfahren nach Anspruch 1 und 2,
dadurch gekennzeichnet, daß
die Umsetzung des Computer-Rasterbildes in steuerbare Lichtstrahlen über eine lichtbeaufschlagte LCD-Matrix (1) (LCD = Liquid Crysral Device = Flüssigkristallanordnung) mit matrixförmig angeordneten lichtsteuernden Elementen (LA1, LB1, LC1, ...) erfolgt, die jeweils einer Computer-Rasterbild-Teilfläche (A1, B1, C1, ...) zugeordnet sind,
wobei jedes lichtsteuerndes Element (LA1, LB1, LC1, ...) im q.ten Zeitabschnitt entsprechend dem Status des q.ten Rasterpunktes der diesem Element (LA1, LB1, LC1, ...) zugeordneten Computer-Rasterbild-Teilfläche (A1, B1, C1, ...) lichtsperrend bzw. lichtdurchlässig gesteuert wird,
und daß das Licht (L), welches das lichtsteuernde Element (LA1, LC1, ...) passiert auf das diesem Element (LA1, LC1, ...) zugeordnete Lochmatrix-Feld (HA1, HB1 ) geleitet wird,
und daß jeweils ein Bildelement durch den die öffnung (a1, c1, ...) dieses Lochmatrix-Feldes (HA1, HC1, ...) passierenden Lichtstrahls (la1, lc1, ) aufgezeichnet wird.

5. Verfahren nach Anspruch 1 und 3,
dadurch gekennzeichnet, daß
die Umsetzung des Computer-Rasterbildes in steuerbare Lichtstrahlen über eine lichtbeaufschlagte LCD-Matrix mit matrixförmig angeordneten lichtsteuernden Elementen (LA1*, LB1*, LC1*, ...) erfolgt,
wobei jede Computer-Rasterbild-Teilflache (A1*) für eine bestimmte Anzahl von Zeitabschnitten jeweils einem von mehreren lichtsteuernden Elementen (LA1*, LB2*, LC3*) zugeordnet wird,
wobei das jeweils zugeordnete lichtsteuernde Element (LA1*, LB2*, LC3*) im q.ten Zeitabschnitt entsprechend dem Status des q.ten Rasterpunktes der Computer-Rasterbild-Teilfläche (A1*) lichtsperrend bzw. lichtdurchlässig gesteuert wird,
und daß das Licht, welches das lichtsteuernde Element (LA1*, LB2*, LC3*) passiert , auf das diesem Element zugeordnete Lochmatrix-Feld (HA1*, HB2*, HC3*) geleitet wird,
und daß jeweils ein Bildelement durch den die Öffnung (a1*, b2*, c3*) dieses Lochmatrix-Feldes (HA1*, HB1*, HC3*) passierenden Lichtstrahl aufgezeichnet wird.

6. Verfahren nach einem der Ansprüche 1 - 5,
dadurch gekennzeichnet, daß
die Größe des Aufzeichnungsträger-Rasterbildes durch ein zwischem Loch-Matrix und Aufzeichnungsträger angeordnetes abbildungsmaßstabsbestimmendes Objektiv bestimmt wird.

7. Verfahren nach Anspruch 1,
dadurch gekennzeichnet, daß
die Umsetzung des Computer-Rasterbildes in steuerbare Lichtstrahlen über ein lichtbeaufschlagtes Kippspiegel-Elemente- Halbleiter-Chip erfolgt.

8. Verfahren nach Anspruch 1,
dadurch gekennzeichnet, daß
die Umsetzung des Computer-Rasterbildes in steuerbare Lichtstrahlen über eine Matrix lichtemittierender Elemente erfolgt.

9. Verfahren nach einem der Ansprüche 1 bis 8,
dadurch gekennzeichnet, daß
die Lochmatrix auf der dem Aufzeichnungsträger abgewandten Seite mit parrallelem (LP) oder konvergierenden (LK) Licht beaufschlagt wird.

10. Verfahren nach Anspruch 1,
dadurch gekennzeichnet, daß
die Umsetzung des Computer-Rasterbildes in steuerbare Lichtstrahlen und die gegenseitige Verschiebung von Loch-Matrix und Aufzeichnungsträger computerprogrammgesteuert erfolgt.

11. Verfahren nach Anspruch 1,
dadurch gekennzeichnet, daß
das auf den Lochmatrix-Feldern (HA1*, HB1*, HC1*, ...) auftreffende Licht durch deren Öffnungen (a1*, b1*, c1*, ...) geleitet wird.

12. Verfahren nach einem der Ansprüche 1 bis 11,
gekennzeichnet durch
Verwendung monochromatischen sichtbaren oder nichtsichtbaren Lichtes mit einer Wellenlänge gleich oder kleiner als die des Lichtes im ultraroten Bereich.

13. Verfahren nach einem der Ansprüche 1 bis 12,
gekennzeichnet durch
seine Anwendung zur Erstellung fotografischer Vorlagen für gedruckte Leiterplatten.

14. Anordnung zur Aufzeichnung eines computergespeicherten Rasterbildes auf einem ebenen lichtempfindlichen Aufzeichnungsträger,
gekennzeichnet durch
a) eine Anordnung matrixartig angeordneter steuerbarer lichtaussender oder (1) lichtbeaufschlagter lichtsteuernder Elemente (LA1, LB1, LC1, ...)
b) eine Lochmatrix (2) mit matrixartig aufgeteilten Lochmatrix-Feldern (HA1, HB1, HC1, ...; HA2, ...), von denen jedes Feld eine öffnung (a1, b1, c1, ...; a2,...) für den Durchlaß eines Lichtstrahles (la1, lc1, ...) zur Aufzeichnung jeweils eines Bildelementes auf dem Aufzeichnungstrager (5) aufweist,
c) eine Aufteilung des Aufzeichnungsträgers (5) in gedachte matrixartig angeordnete Aufzeichnungssträger-Rasterbild-Teilflächen (A1', B1', C1',...; A2',...), von denen jede matrixartig aufgeteilte Bildelement-Positionen (p1, p2, p3,...,p9) aufweist,
d) eine Verschiebeeinrichtung (3) zur gegenseitigen Verschiebung der Lochmatrix (2) gegenüber dem Aufzeichnungsträger (5) ,
wobei
1. das computergespeicherte Rasterbild (0) in gedachte matrixartig angeordnete Computer-Rasterbild-Teilflächen (A1, B1, C1,...;A2 ) aufgeteilt ist, von denen jede matrixartig aufgeteilte Rasterpunkt-Positionen (r1, r2, r3, ...r9) mit jeweils binärem Speicherstatus ( an,aus) aufweist,
2) die Computer-Rasterbild-Teilflächen (A1, B1, C1,...) und die Aufzeichnungsträger-Rasterbild-Teilflächen (A1', B1', C1',...E1'; A2',...) einander zugeordnet sind,
3) die Rasterpunkt-Positionen (r1, r2, r3,...r9) der Computer-Rasterbild-Teilflächen (A1, B1, C1,...) und die Bildelement-Positionen (p1, p2, p3, ...p9) der Aufzeichnungsträger-Rasterbild-Teilflächen (A1', B1', C1'....) einander zugeordnet sind,
4) die Anzahl der steuerbaren lichtaussendenden oder lichtbeaufschlagten lichtsteuernden ( LA1, LB1, LC1,...) Elemente gleich der Anzahl der Öffnungen (a1, b1, c1, ...) der Lochmatrix (2) gleich der Anzahl der Computer-Rasterbild-Teilflächen (A1, B1, C1, ...) ist,
5) mittels der Verschiebeeinrichtung die Öffnungen (a1, b1,c1, ...) der Lochmatrix-Feldes (HA1; HB1; HC1, ...) auf die Bildelement-Positionen der Aufzeichnungsträger-Rasterbild-Teilflächen ausrichtbar (positionierbar) sind,
6) für jede Verschiebeposition der Verschiebeeinrichtung (3) die steuerbaren lichtaussendenden oder die lichtbeaufschlagten Elemente computerprogrammgesteuert entsprechend dem Speicherstatus (an , aus) der dieser Verschiebeposition zuordnungsbaren Rasterpunkt-Position (r1 von A1, r1 von A2) derart steuerbar sind, daß die diesen Elementen (LA1, LB1, LC1, ...) zuordnungsbaren Lochmasken-Felder (HA1, HB1, HC1, ...) mit Licht beaufschlagbar sind oder nicht.
7) die Bildelemente einer Aufzeichnungsträger-Rasterbild-Teilfläche (A1') nacheinander aufzeichenbar sind.
8) die Bildelemente an gleichen Bildelement-Positionen (p1 oder p2 oder p3,....) der Aufzeichnungsträger-Rasterbild-Teilflächen (A1',B1',C1',....) gleichzeitig aufzeichenbar sind.

15. Anordnung nach Anspruch 14 ,
dadurch gekennzeichnet, daß
die Öffnung eines Lochmatrix-Feldes in fester Zuordnung zu einem steuerbaren lichtaussendenden oder lichtbeaufschlagten Element nacheinander auf alle Bildelement-Positionen einer Aufzeichnungsträger-Rasterbild-Teilfläche ausrichtbar ist.

16. Anordnung nach Anspruch 14,
dadurch gekennzeichnet, daß
die Öffnung mehrerer Lochmatrix-Felder in wechselnder Zuordnung zu steuerbaren lichtaussendenden oder lichtbeaufschlagten Elementen nacheinander auf alle Bildelement-Positionen einer Aufzeichnungsträger-Rasterbild-Teilfläche ausrichtbar ist.

17. Anordnung nach Anspruch 15 oder 16,
dadurch gekennzeichnet, daß
zwischen der Lochmatrix (2) und dem Aufzeichnungsträger (5) ein abbildungsmaßstabbestimmendes Objektiv (4) angeordnet ist.

18. Anordnung nach Anspruch 17,
dadurch gekennzeichnet, daß
auf der dem Aufzeichnungsträger (5) abgewandten Seite der Lochmatrix (2) auf jedem Lochmatrix-Feld (HA1, HB1, ...) lichtkonzentrierende Mittel angeordnet sind, durch die das auf diese Felder auftreffende Licht durch die Öffnung (a1, b1) dieser Felder (HA1, HB1) leitbar ist.

19. Anordnung nach Anspruch 18,
dadurch gekennzeichnet, daß
die lichtkonzentrierenden Mittel optische Linsen oder Fresnel'sche Beugungsgitter sind.

20. Anordnung nach Anspruch 19,
dadurch gekennzeichnet, daß
die Fresnel'sche Beugungsgitter konzentrisch angeordnete ebene Kreisringen oder elliptische Ringe aufweisen.

21. Anordnung nach Anspruch 20,
dadurch gekennzeichnet, daß
die konzentrischen Ringe (7) aus einem Material bestehen, durch welches die Phase des auf sie auftreffenden Lichtes um eine halbe Lichtwellenlänge verschiebbar ist.

22. Anordnung nach Anspruch 17,
dadurch gekennzeichnet, daß
vor der dem Aufzeichnungsträger abgewandten Seite der Lochmatrix (9- 2) eine konvergierendes Licht (LK) erzeugende Kondensorlinse (9-7) und daß das abbildungsmaßstabbestimmende Objektiv (9-4) kleiner als die Lochmaske (9-2) ist.

23. Anordnung nach Anspruch 15 oder 16,
dadurch gekennzeichnet, daß die Anordnung lichtbeaufschlagter lichtsteuernder Elemente (LA1, LB1, LC1,...; LA2,...) eine LCD- Matrix (1) (LCD = Liquid Crystal Device = Flüssigkristall-Anordnung ) ist.

24. Anordnung nach Anspruch 15 oder 16,
dadurch gekennzeichnet, daß die Anordnung
lichtbeaufschlagter lichtsteuernder Elemente ein Spiegelelemente-Halbleiter-Chip (9-1) ist.

25. Anordnung nach Anspruch 22 und 24,
dadurch gekennzeichnet, daß
zwischen dem Spiegelelemente-Halbleiter-Chip (9-1) und der Kondensorlinse (9-7) ein Vergrößerungsobjektiv (9-6) angeordnet ist.

26. Anordnung nach Anspruch 14,
dadurch gekennzeichnet,
daß die Verschiebeeinrichtung (3) ein schrittmotorgesteuerter X/Y-Koordinaten -Tisch (8) oder eine piezokristallgesteuerte Einrichtung ist.

27. Anordnung nach Anspruch 25,
dadurch gekennzeichnet,
daß der Spiegelelemente- Halbleiter-Chip (9-1) und die Lochmatrix (9-2) gegenläufig verschiebbar ist, wobei der Verschiebungshub von Chip (9-1) und Lochmatrix (9-2) in Abhängigkeit von dem Vergrößerungsfaktor des Vergrößerungsobjektives (9-6) unterschiedlich ist.
